# EUROPEAN PATENT APPLICATION

(11) **EP 1 965 506 A1**
(43) Date of publication of application: **03.09.2008**
(21) Application number: 08102033.1
(22) Date of filing: 26.02.2008
(51) Int. Cl.: H04B 1/69, H04L 12/28, H04L 29/06, H04Q 11/04, H04L 25/49

(54) **Apparatus and method to combine wired and wireless UWB applications**

(30) Priority: 02.03.2007 US 892783 P
(71) Applicant: Sigma Designs, Inc., Milpitas, CA 95035 (US)
(72) Inventor: Yang, Li-Jau, Milpitas, CA 95035 (US); Nguyen, Hung C., Milpitas, CA 95035 (US)
(74) Representative: 2K Patentanwälte Kewitz & Kollegen

(57) **Abstract**

A system and method set up a beacon group for both wired and wireless UWB nodes along a single superframe with a single time frequency code and then transmits data between the wired and wireless nodes per the single superframe and time frequency code.

## Description

### PRIORITY REFERENCE TO PRIOR APPLICATIONS

This application claims benefit of and incorporates by reference U.S. patent application serial number 60/892,783, entitled "Apparatus and Method to Combine Wired and Wireless UWB Applications," filed on March 2, 2007, by inventors Li-Jau Yang and Hung Nguyen.

### Technical Field

This invention relates generally to ultra-wideband (UWB) and more particularly, but not exclusively, provides an apparatus and method for combining wired and wireless UWB applications.

### Background

UWB technology can be applied to different types of media for different techniques of communications among devices and or/applications, in particular UWB over Coax Cables (UWB-over-Coax) and UWB over Air (Wireless) applications. In order to synchronize and communicate with each other, these devices follow standard-compliant protocols for the underlined PHY and MAC layers. Embodiments of the invention described below use WiMedia Alliance Specification for both PHY and MAC as the protocol for communication over coax or air.

A device that is compliant with WiMedia Alliance MAC and PHY specifications can "see" or "sense" other WiMedia wireless devices ("Wireless Devices") that are currently active. By following the protocol, it can transmit or receive data to/from other devices. The same is true for the communications between UWB devices on coax cables ("Coax Devices"). These Wireless Devices and Coax Devices would form different beacon groups (i.e. "Wireless Groups" and "Coax Groups") in which devices in the same group communicate with each other over the same type of media within a certain distances that UWB technology allows them to reach the others. For devices in the Wireless Group to transmit or receive data to/from other devices in the Coax Group, they would have to communicate with each other through Data Link Layer's Logic Link Control (LLC) and or/ upper layers. Furthermore, other devices such as Access Point or the likes may be required to forward frames from one group to the other.

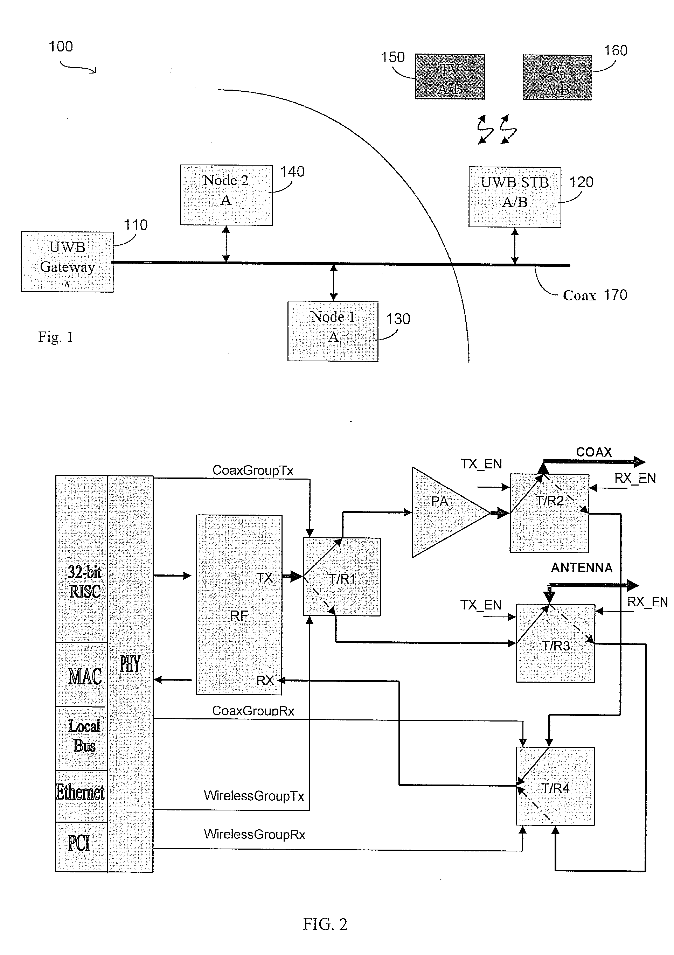

FIG. 1 illustrates a wireless and coax device network. The network comprises a UWB Gateway A coupled to Node 1 and Node 2 via a coax cable. The network also comprises a UWB set top box (STB) or a UWB bridge that is also coupled to the coax cable. The network further comprises a TV and PC that wirelessly communicate with the UWB STB. In this configuration, *UWB Gateway* uses a pair of band group/time frequency code (**BG/TFC**) **A** to exchange frames with its neighbor devices, including *UWB STB, Node 1,* and *Node* 2, through a coax cable. As illustrated in Fig. 1, devices such as TV and PC are not within the range of *UWB Gateway.* However, these two devices might choose to join BG/TFC A through *UWB STB.* When this occurs, UWB STB will function as a repeater.

The frequency spectrum of the Wimedia standard is divided into a number of equally spaced "Bands". Every 3 consecutive Bands are grouped into "Band Group". For example, Band 1, Band 2, and Band 3 are grouped into Band Group 1 (BG 1); Band 4, Band 5, and Band 6 are grouped into Band Group 2 (BG 2), and so on. Time Frequency Code ("TFC") specifies the pattern and sequence of Bands within Band Group are hopped to provide frequency diversity. For example, a communication system can perform frequency hop such as B1, B2, B3, B1, B2, ... (TFC 1); and B1, B3, B2, B1, B3, ... (TFC 2).

Furthermore, devices TV and PC may have already created a beacon group, using a different pair of **BG/TFC B**, to exchange frames. The problem presented in this particular configuration is that A/V streaming or data traffic from SP (service provider) through *UWB Gateway* would see no way to reach *TV* (B) or *PC* (B), due to different setting of BG/TFC values, and vice versa. One alternative to bridge traffic between these two seemly different network segment is to use two set of UWB platforms in *UWB STB-*one to interact with *UWB Gateway* A and the other to interact with TV(B) and *PC(B). UWB STB* system would then buffer data and relay traffic in either direction. The drawback of this solution lies in that it increases the system cost and may have further system-related implications.

Accordingly a new apparatus and method are needed for combining wired and wireless UWB applications.

### SUMMARY

Embodiments of the invention enable Wireless Devices and Coax Devices to communicate with each other in a virtual group ("Wireless-Coax Group"). Embodiments of the invention provides a system and method to set up a beacon group for both wired and wireless UWB nodes along a single superframe with potentially two different BG/TFC sets of value, each for each group and then exchanges data between the wired and wireless nodes per the single superframe.

Embodiments are compliant with WiMedia Alliance protocols. The advantages of the embodiments described further below are as follows:
- Embodiments can simultaneously interact with devices in both Wireless Group and Coax Group. Furthermore, the underlying scheme does not require the involvement of LLC or upper layers for frame forwarding purpose. Therefore, embodiments result in a single chip solution, reducing system cost by eliminating the need to use two chips for this system solution and the need to have devices such as Access Point for frame forwarding purpose.
- In a typical UWB platform-based application, a beacon group is created among devices to communicate to each other with frame exchange; however, this communication is bound to the same pair of BG and TFC, meaning that each device in this beacon group has to use the same pair of BG and TFC to transmit frames or to receive frames, including beacon frames. Violating this rule would result in frame error, and thereafter, degrade system performance.
- Embodiments simplify the complexity of having independent Beacons and Superframes for different mediums. Therefore, embodiments include "one chip" to implement this scheme or "one microprocessor" to implement this scheme.

In the combined wireless and coax cable application, however, the devices or nodes on both ends of the coax cable could use different pair of BG and TFC. When this occurs, it could create problem in relaying the traffic in a streamlined manner between these two separate "network segments." Embodiments disclosed herein resolve this bottleneck. All Wireless Devices and Coax Devices with this solution would "virtually" confine to one beacon group, and that frame exchange between devices located in different BG/TFC environment could still occur in a streamlined manner without interruption.
- Furthermore, in the case that these two segments use the same pair of BG/TFC, embodiments of the invention fimction as a repeater to extend the range.
- Quality-of-Service ("QoS'') would be maintained across different types of media which means that a Coax Device would be able to transmit and receive data to/from a Wireless Device in a way that Quality-of-Service is not compromised.

Embodiments of the invention use only one UWB platform, comprising baseband and radio frequency chipsets, in a *UWB STB,* and even that traffic from *UWB Gateway* A would find no problem to reach *TV*(B) or *PC*(B) through *UWB STB,* and vice versa. A T/R switch relay is used to direct traffic either to coax cable or to antenna. The baseband ASIC provide such controlling signals. Four control *signals-**CoaxGroupTx, CoaxGroupRx, WirelessGroupTx, and WirelessGroupRx**-are* newly created and connected out from baseband ASIC to instruct external T/R switches on how to direct and arbitrate traffic between RF chip and antenna and coaxial cable interfaces across Super Frame timing. The following sections will describe how MAC H/W asserts each of those four control signals in scanning state, beacon period, and data exchange period.

By deploying embodiments of the invention, the STB will enjoy the following benefits: that that frame exchange between devices located in different BG/TFC environment could still occur in a streamlined manner without interruption, that requirement of quality of service could be fulfilled, and that range extension could be realized.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.
FIG. 1 is a block diagram illustrating a network of wired and wireless applications;
FIG. 2 is a block diagram illustrating a set top box (STB)according to an embodiment of the invention;

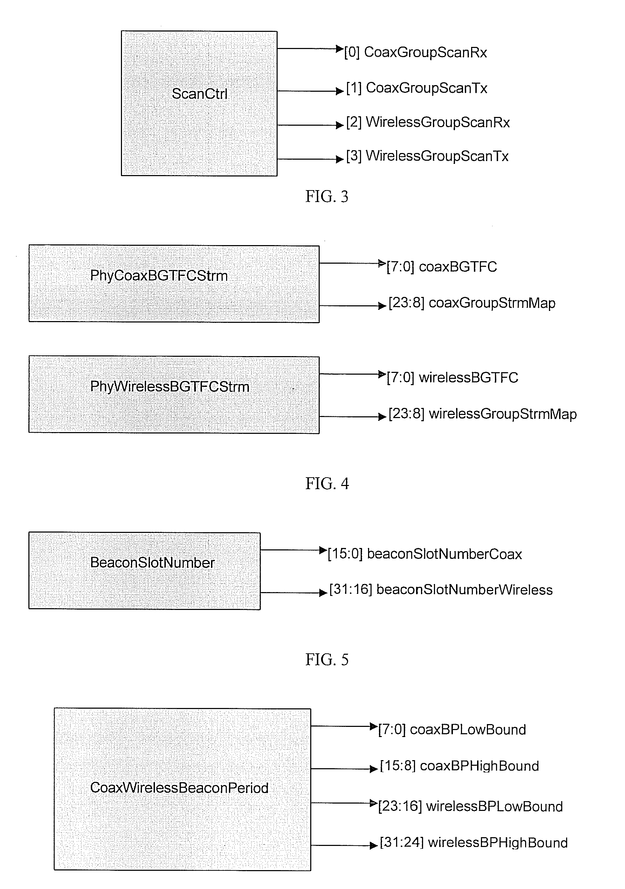

FIG. 3 is a block diagram illustrating a scan control register of the STB;
FIG. 4 is a block diagram illustrating registers for storing the BG and TFC for each wired and wireless group;
FIG. 5 is a block diagram illustrating a beacon slot register;
FIG. 6 is a block diagram illustrating a beacon period register;
FIG. 7 is a chart illustrating a super frame; and
FIG. 8 and FIG. 9 are data flow diagrams.

### DETAILED DESCRIPTION OF THE ILLUSTRATED EMBODIMENTS

The following description is provided to enable any person having ordinary skill in the art to make and use the invention, and is provided in the context of a particular application and its requirements. Various modifications to the embodiments will be readily apparent to those skilled in the art, and the principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein.

In a UWB platform, devices in a beacon group convey their management and control information through beacon frames. A device transmits its beacon in its beacon slot within a beacon period, or BP. This exchange of beacon frames takes place in the first few (one or more) media access slots, or MAS, in a super frame and devices within the same beacon group use information extracted from beacon frames to perform synchronization. Synchronization of devices is disclosed in WiMedia Alliance MAC Specification, which is incorporated herein by reference.

The following sections will describe how MAC H/W asserts each of those four control signals in scanning state, beacon period, and data exchange period.

### I. Channel Scanning

Since CoAir BB ASIC could function as a bridge, it could simultaneously interface to/from both coaxial cable and wireless interfaces, meaning that CoAir BB may need to perform channel scanning on both side. For this purpose a register named ScanControl is created.

If CPU wants to scan neighboring devices in coax group, it sets "CoaxGroupScanRx" bit to "1", choosing incoming RF signal from coax group; similarly, "WirelessGroupScanRx" does the same treat. At the end of scanning on each group, CPU learns the BG and TFC for each group and stores them into two newly created registers each for later use by H/W.

By initiating channel scanning procedure, the *UWB STB* identifies existence of the UWB Gateway and joins its beacon group with the pair of BG/TFC A. During this process, the *UWB STB* also identifies available WiNet Service Set, or WSS, from its neighbors in this beacon group. At the end of this process, the *UWB STB* will create a look up table, including each device's station address and all those WSS associated with each device in this beacon group.

In the scanning process, the *UWB STB* also detects the beacon group formed by *TV*/*PC* (B), if it exists already, and learns of these devices' capabilities and features. When this occurs, the UWB STB will function as a **bridge** or **switch** to switch traffic between these two different beacon groups. That is, the STB is acting as a bridge or switch that manages traffics and communications between different devices over different mediums. From system point of view, these two beacon groups confines to a virtual single beacon group. The detailed implementation of the UWB STB as a bridge will be discussed further below.

However, during the *UWB STB's* scanning process, TV/PC may not form a beacon group yet. In this case, TV and/or PC may join the *UWB STB* as part of UWB Gateway's beacon group, even though they are not within the range of UWB Gateway. When this occurs, the *UWB STB* will function as a **repeater**. That is, the STB also performs like a repeater that extends range on the same medium. For example, UWB over coax medium can send data at 106Mbps over 100m cable, with STB functions as a repeater, the same data can be transmitted at longer distance (greater than 100m). The detailed implementation of *UWB STB* as a repeater will be discussed further detail below.

### II. Beacon Transmission

Once CPU/SW determines which beacon slot to use for either group, it programs BeaconSlotNumber register to the intended value.
■ Prior to transmitting beacon, H/W uses the value of *coaxBGTFC* if superframe timing is in coax's beacon period or *wirelessBGTFC* if superframe timing is in wireless's beacon period to program PHY TX channel's BG/TFC register.
■ Based on beaconSlotNumber, H/W calculates the start time and stop time for transmitting beacon in either group. As a result, H/W will set:
   o Either *CoaxGroupTx* or *WirelessGroupTx* to logic "1" for the duration of a beacon slot, which is 85us

### III. Beacon Reception

Embodiment of this invention could may comprise multiple nodes or devices in each (coax and wireless) group, occupying a range of beacon slot numbers.

When not transmitting beacon, H/W needs to determine when to listen beacon frames from which of those two groups, along BeaconPeriod timeline in a Super Frame.

After scanning process, CPU/SW would have learned the occupancy of beacon slot(s) in each group. CPU will program a newly created register, Coax WirelessBeaconPeriod, with the occupancy range so that H/W can base on it in determining when to switch "listening" between coax group and wireless group.

Based on the range that is bounded by *LowBound and *HighBound registers, H/W will then know when to:
■ switch on *CoaxGroupRx* or *WirelessGroupRx*
■ use the value of *coaxBGTFC* if super-frame timing is in coax's beacon period, or *wirelessBGTFC* if super-frame timing is in wireless's beacon period, to program PHY's BG/TFC register

Furthermore, if CPU programs the *HighBound register with 8'hFF, the beacon listening to that corresponding group is disabled.

### IV. Data Exchange

Before data exchange could take place among devices, a "connection" or a "stream" needs to be established first. Once a "stream" is created and its corresponding MAS are reserved, CPU will set:
■ coaxGroupStrmMap[15:0], or
■ wirelessCroupStrmMap[15:0]

In current implementation, baseband ASIC supports 16 streams at any given time. Therefore, if stream 2 is used by coax group, coaxGroupStrmMap[2] is set to logic 1. Note that the value in each bit position of coaxGroupStrmMap and wirelessGroupStrmMap has to be exclusive..

Furthermore, if coax group's BG/TFC is different from that of wireless group, H/W will program PHY's TXCHANNEL or RXCHANNEL with the proper BG/TFC prior to data exchange, transmission or reception, between these two groups.

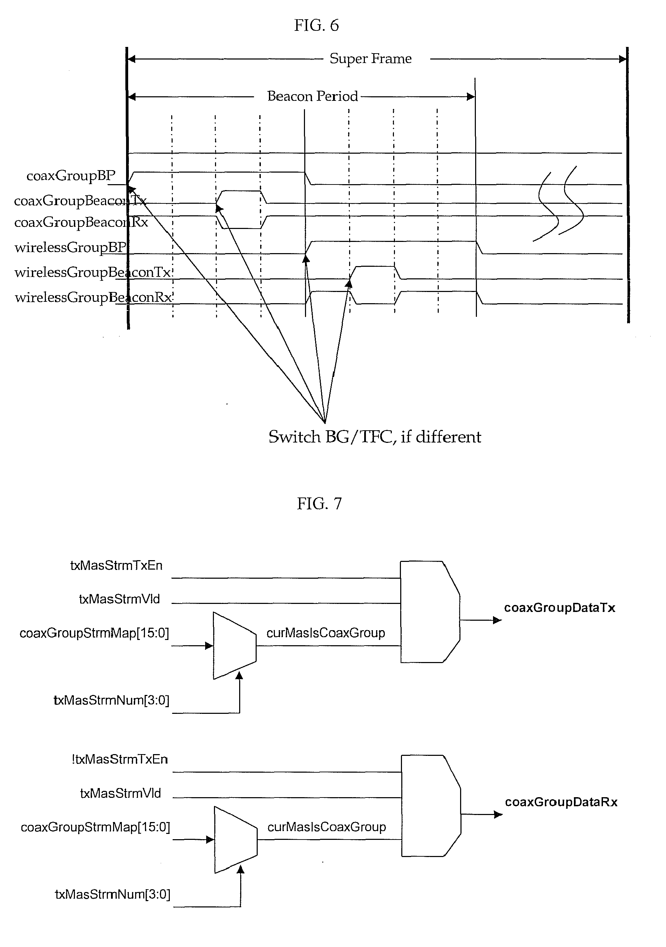

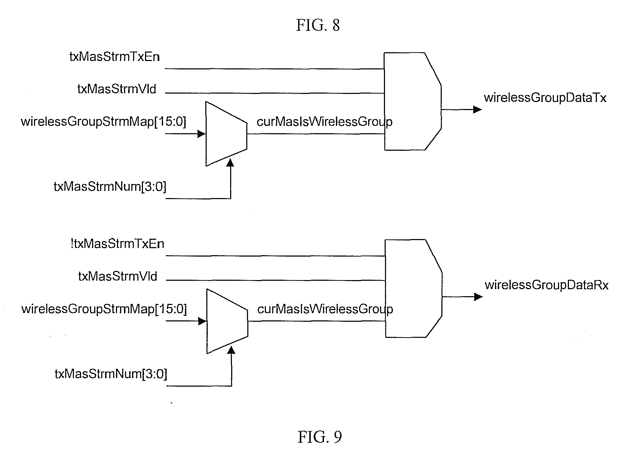

In this invention, MAS time slots or MAS reservation blocks are associated with stream number (txMasStrmNum), that are marked as a valid time slot (txMasStrmVld); and if they are, they are further marked as for data transmission (txMasStrmTxEn) or data reception. Based on aforementioned information, FIG. 7 and 8 are self-explanatory.

In this invention, Baseband ASIC also includes Ethernet interface, PCI interface, and local bus interface. There are "queues" associated with each of these interfaces. During the initial connection setup or the-like mechanism between "devices", e.g. from Ethernet to device in coax group or the vice versa, CPU will learn the network configuration and creates a forwarding look-up table. Frames received from any of aforementioned interfaces, devices in coax group, or devices in wireless group are directed to CPU's attention.

CPU processes the received frame and by looking up the look-up table, it learns of which interface or which device in either coax group or wireless group should receive this frame. Subsequently, it enqueues this frame to the proper transmit queue for transmission.

The foregoing description of the illustrated embodiments of the present invention is by way of example only, and other variations and modifications of the above-described embodiments and methods are possible in light of the foregoing teaching. For example, embodiments can include wired nodes on Cat5, telephone line, and/or power line, etc., not just a coax cable. Components of this invention may be implemented using a programmed general purpose digital computer, using application specific integrated circuits, or using a network of interconnected conventional components and circuits. Connections may be wired, wireless, modem, etc. The embodiments described herein are not intended to be exhaustive or limiting. The present invention is limited only by the following claims.

## Claims

1. A method, comprising:
setting up a beacon group for both wired and wireless UWB nodes along a single superframe;
transmitting data between the wired and wireless nodes per the single superframe.

2. The method of claim 1, wherein the wired nodes includes a gateway and wherein the transmitting transmits data from the gateway to the wired and wireless nodes.

3. The method of claim 1, wherein the setting up uses a different time frequency code and beacon group for each medium.

4. The method of claim 1, wherein the setting up includes channel scanning.

5. The method of claim 1, wherein the beacon group includes a virtual beacon group for a wireless nodes beacon group and a wired nodes beacon group.

6. The method of claim 1, wherein one of the wireless or wired nodes includes an Ethernet bridge.

7. The method of claim 1, wherein the wired nodes are distributed on a Cat5, telephone line or power line.

8. A single chip for executing the method of claim 1.

9. A system, comprising:
means for setting up a beacon group for both wired and wireless UWB nodes along a single superframe;
means for transmitting data between the wired and wireless nodes per the single superframe.

10. A system, comprising:
a processor for setting up a beacon group for both wired and wireless UWB nodes along a single superframe;
a switch control for controlling the transmission of data between the wired and wireless nodes per the single superframe.

11. The system of claim 10, wherein the wired nodes includes a gateway and wherein the switch control controls transmitting data from the gateway to the wired and wireless nodes.

12. The system of claim 10, wherein the processor further uses a different time frequency code and beacon group for each medium.

13. The system of claim 10, wherein the processor sets up beacon group via channel scanning.

14. The system of claim 10, wherein the beacon group includes a virtual beacon group for a wireless nodes beacon group and a wired nodes beacon group.

15. The system of claim 10, wherein the wired or wireless nodes includes an Ethernet bridge.

16. The system of claim 10, wherein the wired nodes are distributed on a Cat5, telephone line or power line.

17. The system of claim 10, further comprising a forwarding look-up table for switching and repeating functions over different mediums.

18. A single chip incorporating the system of claim 10.
